# DEMANDE DE BREVET EUROPEEN

(11) **EP 0 793 332 A1**
(43) Date de publication de la demande: **03.09.1997**
(21) Numéro de dépôt: 97400465.7
(22) Date de dépôt: 28.02.1997
(51) Int. Cl.: H02K 15/02, H02K 1/16, H02K 1/18

(54) **Secteur circulaire pour tôle statorique, stator de machine dynamo-électrique constitué à partir de tels secteurs et machine dynamo-électrique comportant un tel stator**

(30) Priorité: 28.02.1996 FR 9602482
(71) Demandeur: MOTEURS LEROY-SOMER, F-16000 Angouleme (FR)
(72) Inventeur: Chambinaud, Claude, 45140 Saint Jean de la Ruelle (FR); Fouin, Jean, 16730 Linars (FR); Vohlgmuth, Patrick, 16110 La Rochefoucauld (FR)
(74) Mandataire: Derambure, Christian

(57) **Abrégé**

Le secteur (2) est adapté à être découpé sensiblement transversalement dans une bande de tôle ayant des propriétés magnétiques, et à être assemblé avec d'autres secteurs (2) sensiblement identiques pour former une tôle de stator de machine dynamo-électrique. Il comporte sur son bord extérieur (5) au moins une corne principale (15) en saillie radialement vers l'extérieur, et sur son bord extérieur (5) au moins une corne auxiliaire (15), généralement tronquée, décalée angulairement de la corne principale (10) d'un angle égal à une fraction, par exemple à la moitié, de l'angle au centre correspondant audit secteur (2), et adaptée à être découpée dans la zone inutilisée de la bande de tôle située entre le bord extérieur (5) dudit secteur (2) et le bord intérieur (6) d'un autre secteur (2) adjacent.

## Description

La présente invention concerne un secteur sensiblement circulaire pour tôle statorique, adapté à être découpé sensiblement transversalement dans une bande de tôle ayant des propriétés magnétiques, et à être assemblé avec d'autres secteurs sensiblement identiques pour former une tôle de stator de machine dynamo-électrique.

La présente invention concerne également un stator de machine dynamo-électrique constitué à partir de secteurs circulaires du type précité, ainsi qu'une machine dynamo-électrique comportant un tel stator.

On connaît le procédé consistant à former une tôle statorique à partir de secteurs sensiblement circulaires découpés dans une bande de tôle ayant des propriétés magnétiques. Ce procédé, qui est spécialement adopté pour des machines dynamo-électriques de grands diamètres, est rendu nécessaire par le fait que les tôles magnétiques utilisées ne sont disponibles que dans des largeurs inférieures à une largeur maximale peu supérieure à un mètre environ.

Le diamètre extérieur des tôles statoriques découpées d'une seule pièce dans une bande de tôle est également limité par la puissance maximale des presses utilisées pour découper les tôles magnétiques. D'une façon classique, ces presses comportent quatre outils de poinçonnage alignés dans la direction de déplacement de la bande de tôle magnétique. Ces quatre outils découpent successivement, dans une portion de tôle de forme carrée, le bord extérieur et le bord intérieur de la tôle statorique, puis le bord extérieur et le bord intérieur de la tôle rotorique correspondante.

Une presse d'une puissance donnée ne peut découper que des tôles statoriques d'un diamètre inférieur ou égal à un diamètre maximal donné. Au-delà de ce diamètre maximal, il faut compléter l'opération de découpe à la presse du contour extérieur, par une seconde opération, coûteuse, de découpe au moyen d'une autre machine telle qu'une cisaille grignoteuse.

Pour des diamètres extérieurs de stators supérieurs à la largeur maximale ou au diamètre maximal précités, on forme une tôle statorique à partir de secteurs découpés sensiblement transversalement dans une bande de tôle.

Dans le cas spécifique des générateurs synchrones (alternateur), on peut découper les tôles rotoriques de la roue polaire dans une bande de tôle d'acier avec des propriétés magnétiques différentes : le coût inférieur du rotor correspondant compense le supplément du coût du stator lié à l'opération d'assemblage de plusieurs secteurs pour former une tôle statorique complète.

Pour économiser la tôle magnétique statorique isolée, qui est un matériau onéreux, il est connu de découper deux secteurs adjacents dans la direction longitudinale de la tôle magnétique de façon à ne laisser entre chaque secteur et les bords longitudinaux de la tôle, d'une part, et entre les deux secteurs, d'autre part, que des portions ayant une largeur, de l'ordre de deux ou trois millimètres environ, juste nécessaire pour garantir une découpe précise et fiable desdits secteurs.

De façon classique, un secteur du type précité comporte un bord périphérique extérieur et un bord périphérique intérieur circulaire reliés l'un à l'autre par deux bords latéraux dirigés sensiblement radialement.

Il est également connu, notamment d'après les documents GB-1 092 864 et JP-5 510 061, de prévoir, sur le bord extérieur du secteur, au moins une corne principale en saillie radialement vers l'extérieur et conformée de façon à être découpée sensiblement transversalement dans une bande de tôle ayant des propriétés magnétiques, et à être assemblé avec d'autres secteurs sensiblement identiques pour former une tôle de stator de machine dynamo-électrique, ce secteur comportant un bord périphérique extérieur et un bord périphérique intérieur circulaire reliés l'un à l'autre par deux bords latéraux dirigés sensiblement radialement, le secteur comportant en outre, sur son bord extérieur au moins une corne principale en saillie radialement vers l'extérieur et conformée de façon à être découpée au voisinage de l'un des bords latéraux dudit secteur dans la zone inutilisée de la bande de tôle située entre le bord longitudinal correspondant de ladite bande, le bord extérieur dudit secteur et le bord latéral correspondant d'un second secteur adapté à être découpé dans la partie de bande adjacente au bord extérieur dudit secteur.

Le procédé précité présente des inconvénients liés à la nécessité de relier solidement plusieurs secteurs dans un même plan pour former une tôle statorique complète, et plusieurs tôles statoriques complètes ainsi formées, empilées les unes sur les autres dans la direction perpendiculaire audit plan, pour former un paquet de tôles statoriques constituant un stator dont l'axe est également perpendiculaire audit plan.

Pour renforcer la rigidité et la résistance mécanique du stator, on décale angulairement les secteurs d'une tôle par rapport aux secteurs de la tôle précédente et à ceux de la tôle suivante dans le paquet de tôle. Ce décalage angulaire est effectué selon un angle égal à une fraction, par exemple à la moitié, de l'angle au centre correspondant à un secteur.

Il est connu d'assembler les secteurs par des cordons de soudure ménagés sur la surface périphérique extérieure dudit stator et réunissant les bords extérieurs des secteurs correspondants.

Cependant, ce procédé ne permet pas d'obtenir un bon alignement des paquets de tôle tout en aboutissant à une méthode d'assemblage simple et rapide.

Dans le cas particulier des machines ouvertes à refroidissement par air, il est connu de souder extérieurement une tige aux coins respectifs des bords extérieurs de deux secteurs adjacents, ce tirant s'étendant sensiblement dans la direction de l'axe du stator.

D'une manière générale, les cordons de soudure court-circuitent localement au voisinage du point de soudure les tôles ou secteurs de tôles statoriques, ce qui produit lors du fonctionnement de la machine dynamo-électrique correspondante des pertes de rendement par courants de Foucauld.

Il est également connu, dans le cas de tôles statoriques complètes découpées d'une seule pièce dans une bande de tôle magnétique, de prévoir ces tôles avec des cornes qui sont découpées au moment du découpage de la tôle statorique correspondante dans la zone inutilisée de la bande de tôle située dans le coin compris entre le bord longitudinal correspondant de ladite bande, le bord extérieur de ladite tôle statorique et une ligne imaginaire transversale par rapport à ladite bande de tôle et séparant une tôle statorique de la tôle statorique adjacente. La présence de ces cornes, qui sont découpées dans une zone inutilisée, destinée à être recyclée sous forme de ferraille, de la bande de tôle, n'a pratiquement pas d'incidence sur le prix de revient de la tôle statorique correspondante.

Il est alors connu de réunir les tôles statoriques les unes aux autres par une soudure ménagée sur le côté d'une telle corne, de façon à constituer un paquet de tôles rigide et résistant. De telles soudures n'ont pratiquement pas d'influence sur les pertes de rendement par courant de Foucauld du stator, car elles se trouvent dans une zone où le flux est très faible.

Dans le cas d'une machine dynamo-électrique ouverte à refroidissement forcé par air, il est connu de donner à la tige ou à la corne de la tôle statorique une hauteur radiale sensiblement égale à la hauteur radiale de l'espace nécessaire entre la surface périphérique extérieure du stator et la surface périphérique intérieure d'un carter de ladite machine dynamo-électrique pour le passage de l'air de refroidissement.

Le but de la présente invention est de remédier aux inconvénients précités rencontrés avec l'utilisation de secteurs de tôles statoriques de type connu, et de proposer une structure nouvelle de secteur permettant de supprimer ces inconvénients et de faciliter l'assemblage et la réalisation d'un stator de grande dimension de structure précise, d'excellente résistance mécanique, tout en permettant un bon alignement des secteurs les uns par rapport aux autres, ce stator présentant par ailleurs d'excellentes caractéristiques électromagnétiques et un prix de revient qui n'est pas supérieur à celui d'un stator réalisé avec des secteurs de type connu.

Un autre but de l'invention est de proposer un stator constitué à partir de secteurs circulaires du type précité, ainsi qu'une machine dynamo-électrique comportant un tel stator.

Suivant l'invention, le secteur sensiblement circulaire pour tôle statorique du type précité est caractérisé en ce que le secteur présente sur son bord extérieur au moins une corne auxiliaire, généralement tronquée, décalée angulairement de la corne principale d'un angle égal à une fraction, par exemple à la moitié, de l'angle au centre correspondant audit secteur, et adaptée à être découpée dans la zone inutilisée de la bande de tôle située entre le bord extérieur dudit secteur et le bord intérieur d'un autre secteur adjacent.

Les dimensions de la zone inutilisée entre le bord extérieur du secteur et le bord intérieur d'un autre secteur adjacent sont apparues suffisantes pour découper dans ladite zone au moins une corne auxiliaire ayant une hauteur, en direction radiale, et une largeur, en direction tangentielle, limitées mais suffisantes pour contribuer de façon efficace à la mise au point d'une solution satisfaisante aux problèmes d'assemblage et de fixation des secteurs les uns aux autres.

La corne auxiliaire est ainsi découpée dans une zone inutilisée de la bande de tôle et faisant partie des déchets de découpe. Ainsi, la présence de cette corne n'augmente pratiquement pas le prix de revient du secteur.

En outre, la présence de cette corne auxiliaire permet de prévoir des moyens simples d'assemblage et de fixation des secteurs les uns aux autres sans prévoir nécessairement une étape de soudure de ces moyens d'assemblage et de fixation, tout en obtenant un bon alignement des secteurs suivant la direction axiale.

Suivant une version de l'invention, le secteur comporte en outre une corne principale à chaque coin de son bord extérieur, les deux cornes principales adjacentes de deux secteurs contigus assemblés dans un même plan le long d'un bord latéral commun étant adaptées à former une corne composée.

Suivant une autre version de l'invention, la corne auxiliaire présente au moins un côté adapté à se superposer sensiblement à un côté correspondant de la corne principale dudit secteur par un décalage angulaire d'un angle égal à ladite fraction de l'angle au centre correspondant audit secteur.

Suivant un mode de réalisation, la corne principale présente une ouverture, et la corne auxiliaire présente aussi une échancrure concave adaptée à se superposer au moins partiellement à l'ouverture par ledit décalage angulaire.

Suivant un autre mode de réalisation, la corne principale et la corne auxiliaire présentent respectivement une échancrure principale concave et au moins une échancrure auxiliaire concave, l'échancrure auxiliaire concave étant adaptée à se superposer au moins partiellement à l'échancrure principale concave de la corne principale, par ledit décalage angulaire.

Suivant un troisième mode de réalisation, la corne auxiliaire comporte deux échancrures auxiliaires concaves ménagées respectivement au coin des bords extérieurs de la corne auxiliaire.

Enfin, on peut prévoir que les échancrures auxiliaires et les échancrures principales sont de forme sensiblement identique, les échancrures auxiliaires de la corne auxiliaire d'un secteur étant adaptées à se superposer sensiblement aux échancrures principales d'une corne composée, par ledit décalage angulaire.

Suivant un autre aspect de l'invention, le stator de machine dynamo-électrique est constitué à partir de secteurs circulaires assemblés et fixés de façon à former un paquet de tôles statoriques ; deux secteurs, ou groupes de secteurs, adjacents empilés l'un sur l'autre dans la direction axiale du stator étant décalés angulairement l'un de l'autre d'un angle égal à une fraction, par exemple à la moitié, de l'angle au centre correspondant audit secteur.

Suivant l'invention, ce stator est caractérisé en ce qu'il est constitué à partir de secteurs selon l'invention tels que décrits précédemment.

Une tige peut être engagée dans les ouvertures ou échancrures principales superposées axialement de la corne principale des secteurs ou groupes de secteurs superposés axialement correspondants, et peut être reçue dans les échancrures auxiliaires de la corne auxiliaire d'autres secteurs ou groupes de secteurs interposés axialement entre deux secteurs ou groupes de secteurs correspondants et décalés angulairement dudit angle par rapport à ces derniers.

Par exemple, un cordon de soudure est ménagé le long de certaines au moins des rangées parallèles de cornes formées par les cornes principales et auxiliaires de façon à réunir lesdites cornes les unes aux autres au niveau de leurs côtés superposables respectifs et de préférence à la tige correspondante.

Suivant un autre mode de réalisation, chaque secteur ou groupe de secteurs amplifiés suivant la direction axiale peut comporter deux types de tiges :
- une tige principale destinée à être engagée dans une échancrure ou groupe d'échancrures principale(s) d'un secteur ou groupe de secteurs ;
- une tige auxiliaire destinée à être engagée dans une échancrure ou groupe d'échancrures auxiliaire(s) d'un secteur ou groupe de secteurs ;

la tige principale d'un secteur étant engagée en outre dans au moins une échancrure auxiliaire coïncidente des secteurs ou groupe de secteurs adjacents ;
la tige auxiliaire dudit secteur étant engagée en outre dans au moins une échancrure principale coïncidente desdits secteurs ou groupe de secteurs adjacents.

Par exemple, suivant la direction axiale, les tiges principale et auxiliaire sont alternées d'un secteur ou groupe de secteurs aux secteurs ou groupes de secteurs adjacents.

Selon un troisième aspect de l'invention, la machine dynamo-électrique comporte un stator fixé à l'intérieur d'un carter de la machine. Elle est caractérisée en ce qu'elle comporte un stator selon l'aspect précédent de l'invention.

Suivant un premier mode de réalisation, la hauteur en direction radiale des cornes principales des secteurs est égale à la hauteur radiale de l'espace nécessaire, entre la surface périphérique extérieure du stator et la surface périphérique intérieure du carter, pour le passage d'un fluide de refroidissement dudit stator.

Suivant un deuxième mode de réalisation, la hauteur en direction radiale des cornes principales des secteurs et/ou celle des cornes auxiliaires est sensiblement inférieure à la hauteur radiale de l'espace nécessaire, entre la surface périphérique extérieure du stator et la surface périphérique intérieure de l'enveloppe pour le passage d'un fluide de refroidissement dudit stator.

D'autres particularités et avantages de la présente invention apparaîtront dans la description détaillée ci-après.

Aux dessins annexés, donnés uniquement à titre d'exemples :
- la figure 1 est une vue schématique de dessus d'une bande de tôle sur laquelle ont été représentés les contours respectifs de trois secteurs consécutifs selon un premier mode de réalisation de la présente invention ;
- la figure 2 est une vue semblable à la figure 1 représentant des secteurs selon deux modes de réalisation de la présente invention ;
- la figure 3 est une vue schématique en perspective d'un assemblage de secteurs selon la figure 1 assemblé et empilé de façon à former un paquet de tôles statoriques ;
- la figure 4 est une vue schématique partielle d'un stator selon la figure 3 logé dans un carter de moteur ;
- la figure 5 est une vue semblable à la figure 4 d'un autre mode de réalisation du stator de la figure 3 ;
- la figure 6 est une vue partielle en coupe selon VI-VI à la figure 4 ;
- la figure 7 est une vue partielle de face de l'assemblage dans un même plan de deux secteurs selon le mode de réalisation représenté à la partie supérieure de la figure 2 ;
- la figure 8 est une vue semblable à la figure 7, les deux secteurs correspondant au mode de réalisation représenté à la partie inférieure de la figure 2 ;
- la figure 9 est une vue semblable à la figure 4 d'un stator réalisé avec des secteurs selon le mode de réalisation de la figure 7 ;
- la figure 10 est une vue semblable à la figure 6 et correspondant à une coupe selon X-X à la figure 9 ;
- la figure 11 est une vue semblable à la figure 2 d'un autre mode de réalisation du secteur selon l'invention ;
- la figure 12 est une vue semblable à la figure 9 pour un stator réalisé avec des secteurs selon la figure 11 ;
- la figure 13 est une vue schématique partielle de dessus d'un stator selon la figure 9 ou 12 dont les rangées de cornes sont inclinées par rapport à l'axe du stator ;
- la figure 14 est une vue semblable à la figure 13 montrant ledit stator recouvert par deux éléments de viroles de carter assemblées par un cordon de soudure parallèle à l'axe et chevauchant une rangée de cornes ;
- la figure 15 est une vue semblable à la figure 1 représentant deux secteurs selon un autre mode de réalisation de la présente invention ;
- la figure 16 est une vue schématique en perspective d'un assemblage de secteur selon la figure 15 ;
- la figure 17 est une vue schématique partielle en plan d'un stator selon la figure 16 ;
- la figure 18 est une vue schématique partielle de dessus de la disposition des tiges principales et auxiliaires dans un stator selon la figure 16 ;
- la figure 19 est une vue schématique en perspective semblable à la figure 16, le stator étant muni de barreaux définissant l'espace de passage de fluide de refroidissement ;
- la figure 20 est une vue schématique en plan du stator selon la figure 19 ;

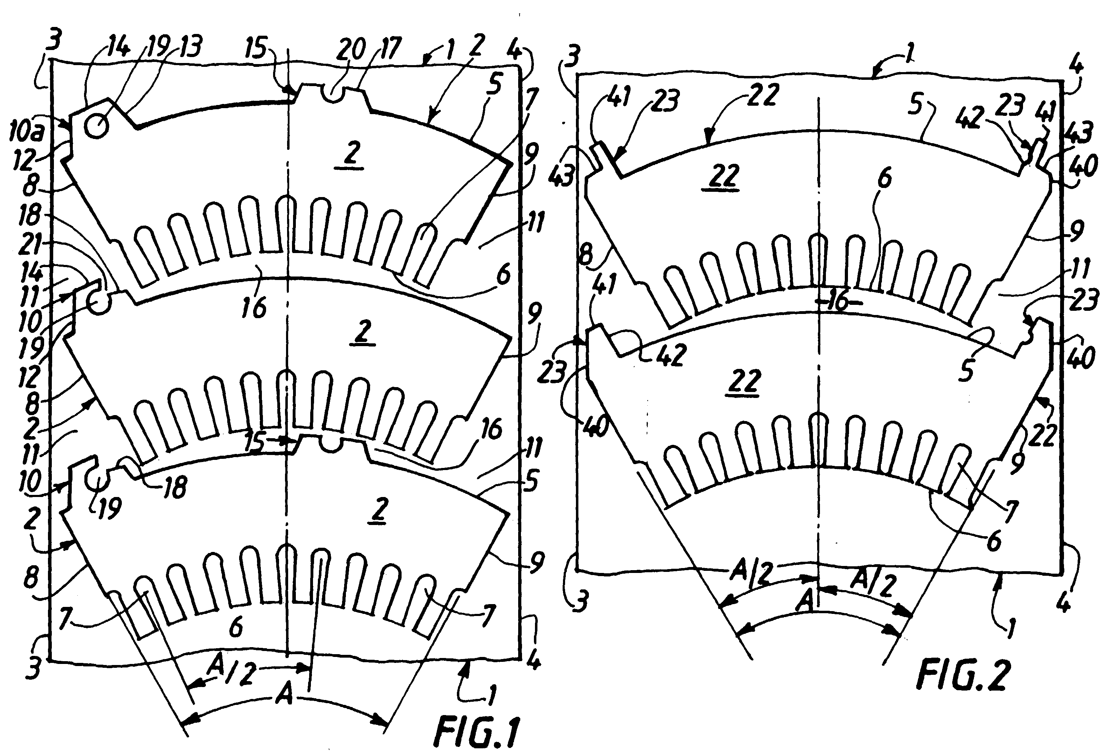

On a représenté à la figure 1 une bande 1 de tôle ayant des propriétés magnétiques dans laquelle sont adaptés à être découpés sensiblement transversalement des secteurs 2 sensiblement circulaires. Sont également représentés à la figure 1 les contours respectifs de trois secteurs consécutifs séparés l'un de l'autre par une distance minimale imposée par les outils de découpe des secteurs 2 dans la bande 1. De façon classique, il faut réserver environ deux millimètres entre le contour d'un secteur 2 et les bords longitudinaux 3 et 4 de la bande de tôle 1 ou le contour d'un secteur 2 adjacent.

Chaque secteur 2 sensiblement circulaire est adapté à être assemblé avec d'autres secteurs sensiblement identiques pour former une tôle de stator de machine dynamo-électrique. Chaque secteur 2 comporte un bord périphérique extérieur 5, sensiblement circulaire sur la figure, un bord périphérique intérieur 6 circulaire dans lequel sont ménagées de nombreuses encoches 7 destinées à recevoir des enroulements (non représentés), les bords 5 et 6 étant reliés l'un à l'autre par deux bords latéraux 8 et 9 dirigés sensiblement radialement.

Chaque secteur 2 comporte sur son bord extérieur 5 au moins une corne principale 10 en saillie radialement vers l'extérieur et conformée de façon à être découpée au voisinage de l'un des bords latéraux 8, 9 du secteur 2 dans la zone 11 inutilisée de la bande 1 de tôle située entre le bord longitudinal 3, 4 correspondant de la bande 1, le bord extérieur 5 dudit secteur 2 et le bord latéral 8, 9 correspondant d'un second secteur 2 adapté à être découpé dans la partie de bande 1 adjacente au bord extérieur 5 dudit secteur 2.

La corne 10 peut avoir par exemple une forme sensiblement trapézoïdale. En effet, il est facile de donner à la corne 10 représentée à la figure 1 un premier côté latéral 12 sensiblement parallèle au bord longitudinal 3 de la bande 1, et un second côté 13 sensiblement parallèle au bord latéral 8 du secteur 2 adjacent. La petite base 14 de la corne 10 peut avoir une forme sensiblement tangentielle, circulaire concentrique au bord périphérique extérieur 5 du secteur 2. Comme on le verra plus loin, la corne 10 a en direction radiale une hauteur prédéterminée.

Il est évidemment possible de donner à la corne 10 toute autre forme que celle décrite ci-dessus dès lors que cette forme peut être découpée dans la zone inutilisée 11 de la bande 1.

Comme représenté dans la partie supérieure et dans la partie inférieure de la figure 1, le secteur 2 présente en outre sur son bord extérieur 5 au moins une corne auxiliaire 15, généralement tronquée, décalée angulairement de la corne principale 10 d'un angle A /2 égale à la moitié de l'angle au centre A correspondant au secteur 2. La corne auxiliaire 15 est adaptée à être découpée dans la zone inutilisée 16 de la bande 1 de tôle située entre le bord extérieur 5 du secteur 2 et le bord intérieur 6 d'un autre secteur adjacent.

La corne auxiliaire 15 présente au moins un côté 17 adapté à se superposer à un côté correspondant 18 de la corne principale 10 par ledit décalage angulaire d'angle A/2.

On voit à la figure 1 que la corne principale 10 présente une ouverture circulaire 19. La corne auxiliaire 15 présente une échancrure concave 20 de même contour circulaire adaptée à se superposer au moins partiellement à l'ouverture 19 par ledit décalage angulaire d'angle A/2. On voit à la figure 1 que le secteur 2 représenté en haut de la figure comporte une corne principale 10a présentant un contour trapézoïdal complet et percée d'un trou circulaire 19.

Les deux autres secteurs représentés à la figure 1 comportent un contour trapézoïdal incomplet présentant une entaille 21 faisant communiquer l'ouverture 19 avec l'extérieur et ménagée au niveau du coin entre la petite base 14 et le second côté 13 de la corne 10. Cette entaille 21 est limitée vers le second côté 13 par le côté 18 précité dont on verra plus loin la fonction.

Dans la pratique, il est possible de former la corne auxiliaire 15 de manière que l'échancrure 20 corresponde à environ 60% de la circonférence de l'ouverture 19.

Suivant un autre mode de réalisation représenté à la figure 15, le secteur 2 comporte deux cornes principales 10 disposées au voisinage des bords latéraux 8 et 9.

Chaque corne principale 10 présente une échancrure principale concave 19a.

Le secteur 2 selon la figure 15 comporte en outre une corne auxiliaire 15 qui présente deux échancrures auxiliaires concaves 20a et 20b qui sont adaptées à se superposer au moins partiellement à l'échancrure principale 19a des cornes principales 10 par ledit décalage angulaire.

Les échancrures auxiliaires 20a et 20b sont ménagées respectivement aux coins de bords latéraux 15a et 15b de la corne auxiliaire 15, et ont une forme sensiblement identique à celle des échancrures principales 19a.

Dans l'exemple de la figure 15, la corne auxiliaire est centrée suivant la direction tangentielle sur le bord extérieur 5 du secteur 2.

Bien entendu, les trois types de secteurs représentés à la figure 1 et le type représenté à la figure 15 correspondent à quatre types d'outillage différents.

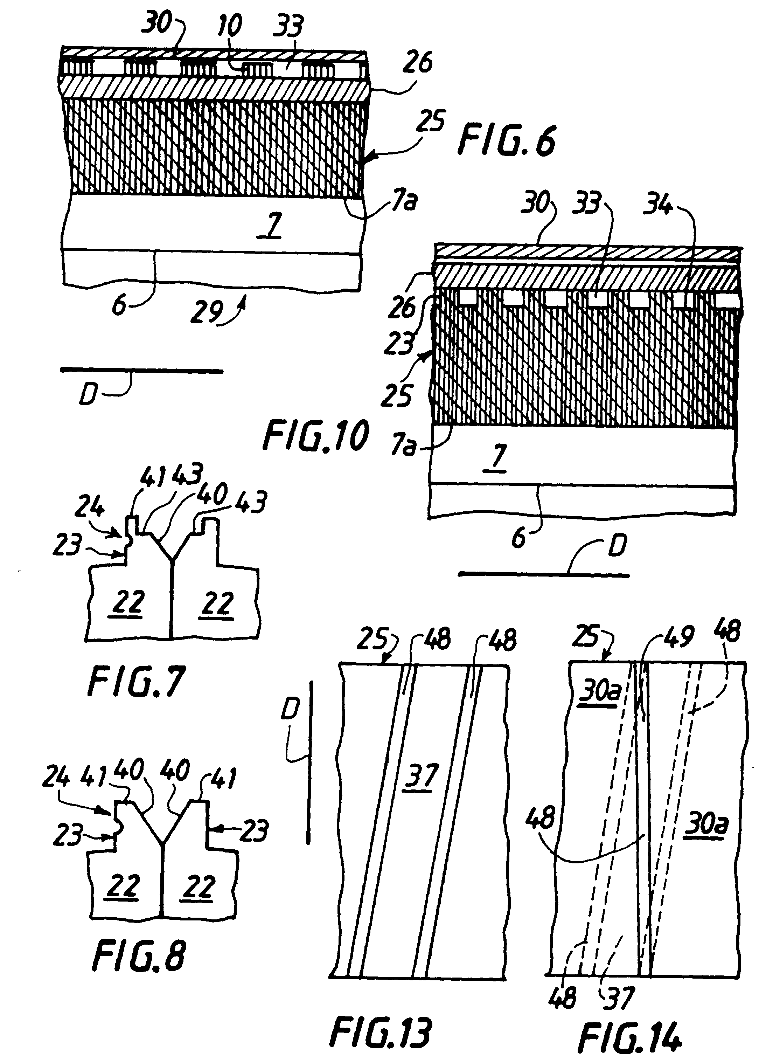

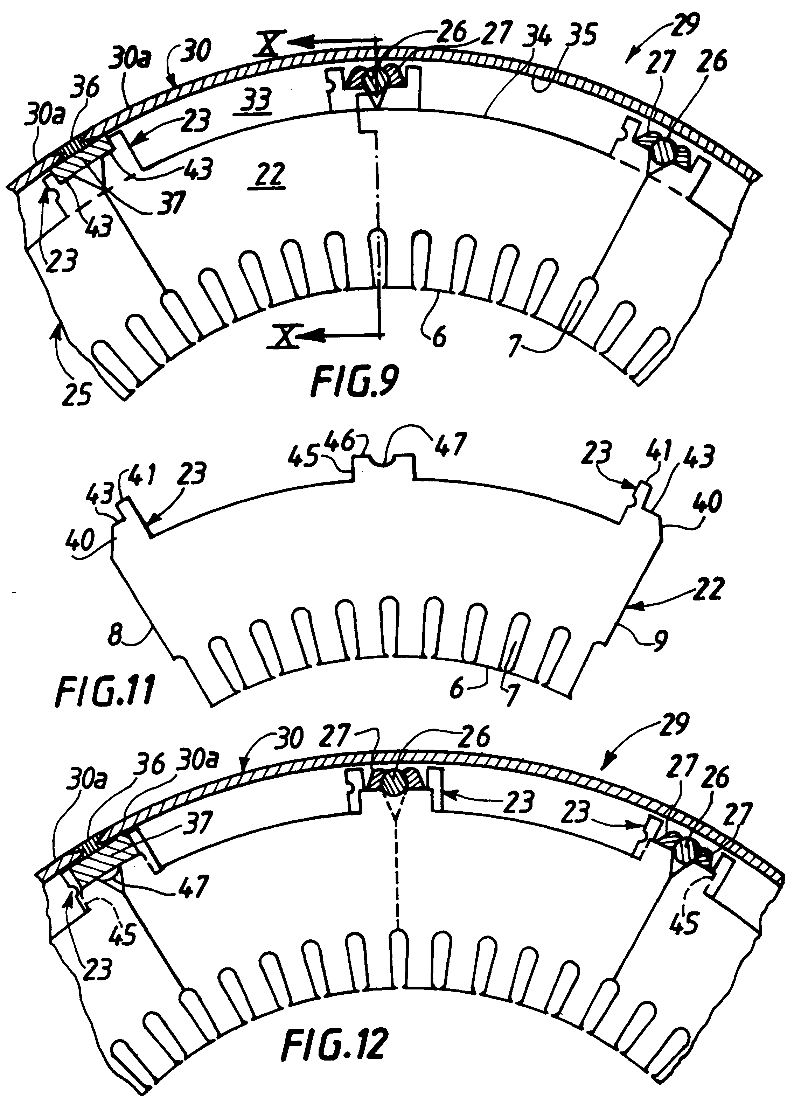

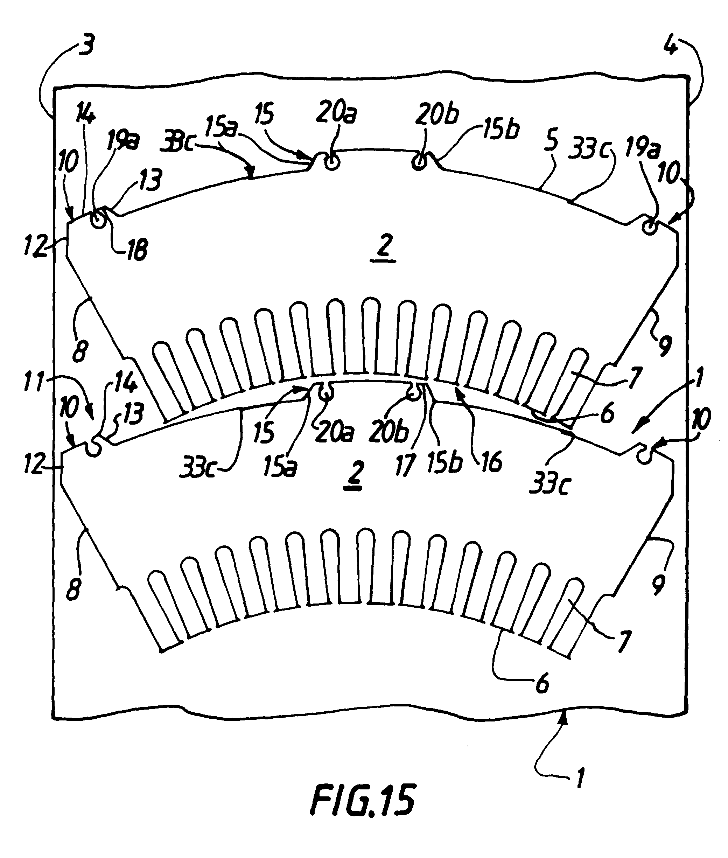

Dans le mode de réalisation représenté à la figure 2, le secteur 22 a une forme générale semblable à celle du secteur 2 décrit ci-dessus. Il comporte une corne 23 à chaque coin de son bord extérieur 5, et les deux cornes 23 adjacentes de deux secteurs 22 contigus assemblés le long d'un bord latéral commun sont adaptés à former une corne composée 24 qui sera détaillée plus loin (voir figures 7 et 8). Les éléments représentés à la figure 2 qui sont identiques aux éléments correspondants de la figure 1 comportent les mêmes numéros de référence que ces derniers.

Le secteur représenté à la partie inférieure de la figure 2 comporte une corne 23 sensiblement en forme de trapèze rectangle. La corne 23 présente un côté extérieur 40 sensiblement parallèle au bord longitudinal 3,4 correspondant de la bande 1, un bord extérieur 41 sensiblement radial et un bord intérieur 42 sensiblement radial.

Dans le secteur représenté à la partie supérieure de la figure 2, le bord extérieur 40 est entaillé de manière à former un épaulement 43 dont on verra ci-dessous la fonction.

On peut également, de façon connue, ménager sur le bord extérieur 5 du secteur 2, 22, lors du découpage de ce secteur, des ailettes en saillie par rapport à ce bord 5 et faisant office d'ailettes de refroidissement, ces ailettes étant découpées dans la zone inutilisée 16.

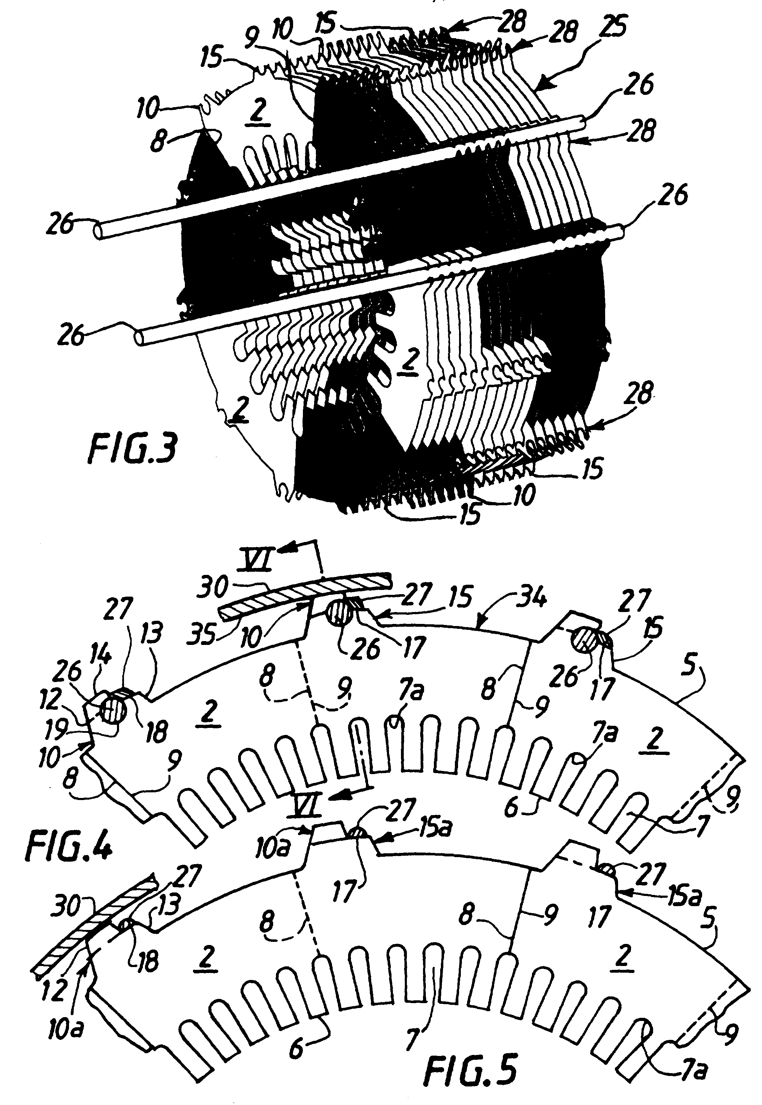

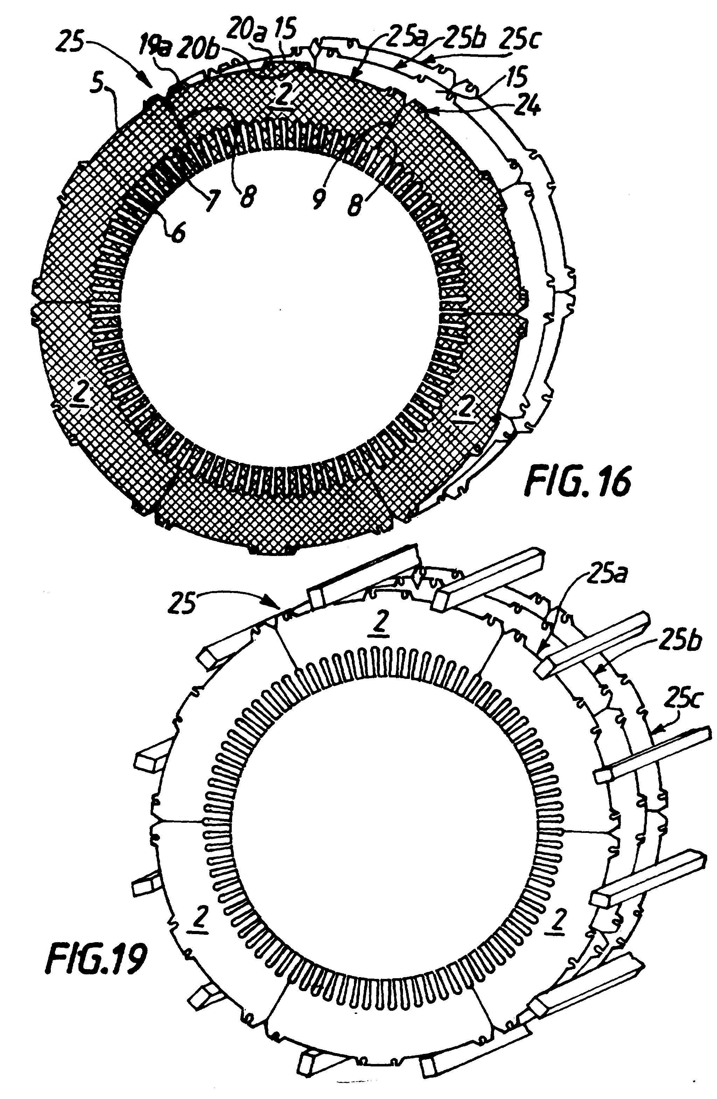

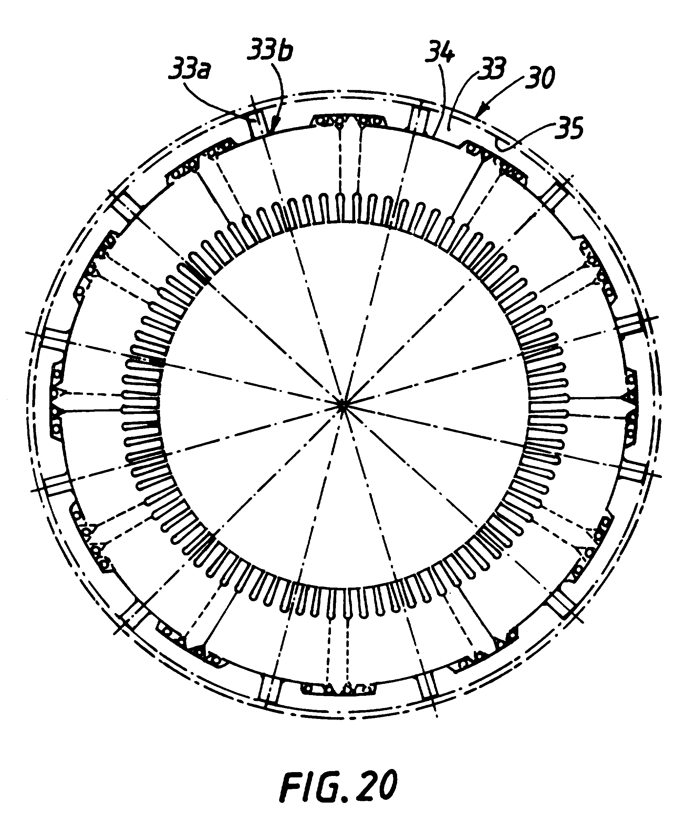

On a représenté schématiquement aux figures 3, 16 et 19 un stator 25 de machine dynamo-électrique constitué à partir de secteurs circulaires 2 assemblés et fixés de façon à former un paquet de tôles statoriques. Pour simplifier, on a représenté aux figures 16 et 19 seulement une épaisseur de tôle ou un secteur par paquet, soit trois paquets 25a, 25b et 25c.

De façon classique, deux secteurs, ou groupes de secteurs, par exemple 25a et 25b, empilés l'un sur l'autre sont décalés angulairement l'un de l'autre d'un angle égal à une fraction, dans l'exemple représenté la moitié A/2 de l'angle au centre A correspondant auxdits secteurs.

Suivant la figure 1, le stator 25 est constitué à titre d'exemple de groupes de six secteurs 2 du type décrit ci-dessus, comportant chacun une corne principale 10 et une corne auxiliaire 15.

Suivant les figures 16 et 19, le stator 25 est constitué à titre d'exemple de groupes de six secteurs 2 du type décrit ci-dessus, comportant chacun deux cornes principales 10 à une échancrure 19a et une corne auxiliaire 15 à deux échancrures 20a et 20b.

Dans cet exemple, chaque secteur 2 correspond à un angle au centre de 60° et six secteurs sont assemblés dans le même plan pour former une tôle statorique. On a ombré sur la figure 3 un secteur sur deux pour montrer le décalage angulaire de A/2, soit 30°, entre deux groupes adjacents de secteurs empilés axialement.

Comme représenté à la figure 3, une tige 26 est engagée dans l'ouverture 19 des cornes principales 10 des secteurs 2 correspondants.

La tige 26 est également reçue dans l'échancrure 20 des cornes auxiliaires 15 des secteurs 2 décalés axialement, et angulairement de 30°, par rapport aux secteurs précédents.

Dans ce mode de réalisation, la tige 26 joue le rôle de tirant.

Etant donné que le contour de l'échancrure 20 correspond environ à 60% d'une circonférence, ce contour est suffisant pour faire prise sur la paroi périphérique dudit tirant. Ainsi, chaque secteur 2 est en prise avec deux tirants 26, ce qui interdit tous mouvements relatifs du tirant 26 et du secteur 2 autres qu'un coulissement en direction axiale.

Suivant l'autre mode de réalisation du stator, représenté aux figures 16 et 19, la corne composée 24 est constituée de deux cornes principales 10 munies respectivement de leur échancrure principale 19a qui viennent se superposer axialement, par le décalage angulaire, sur la corne auxiliaire 15 du secteur ou groupe de secteur, par exemple 25b, adjacent.

Ainsi, des tiges 26 vont pouvoir être engagées dans les échancrures principales 19a et auxiliaires 20a et 20b superposées.

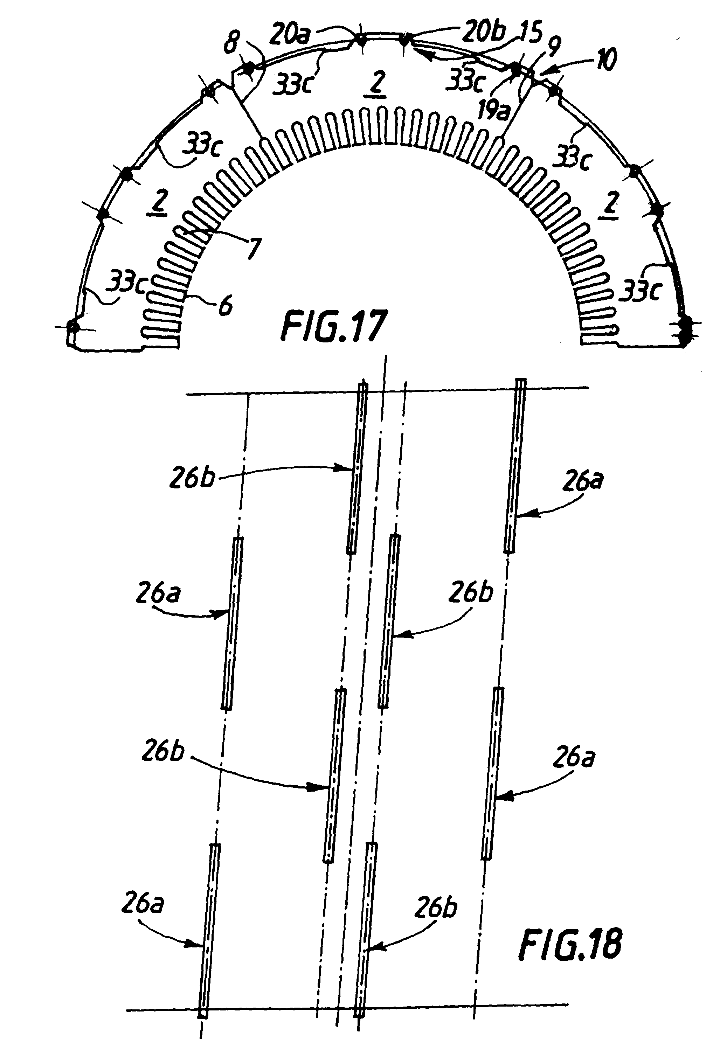

Suivant un mode de réalisation représenté schématiquement à la figure 18, chaque secteur ou groupe de secteur comporte à cet effet deux types de tiges, à savoir :
- une tige principale 26a destinée à être engagée principalement dans une échancrure ou groupe d'échancrures principale(s) d'un secteur ou groupe de secteurs ;
- une tige auxiliaire 26b destinée à être engagée principalement dans une échancrure ou groupe d'échancrures auxiliaire(s) d'un secteur ou groupe de secteurs ;

la tige principale d'un secteur étant engagée en outre dans au moins une échancrure auxiliaire coïncidente des secteurs ou groupe de secteurs adjacents ;
la tige auxiliaire dudit secteur étant engagée en outre dans au moins une échancrure principale coïncidente desdits secteurs ou groupe de secteurs adjacents.

Par exemple, tel que cela est représenté à la figure 18, suivant la direction axiale, les tiges principale 26a et auxiliaire 26b sont alternées d'un secteur ou groupe de secteurs aux secteurs ou groupes de secteurs adjacents.

Ces tiges 26a et 26b ont alors pour rôle d'assurer le bon alignement du secteur ou groupe de secteurs.

Après assemblage du paquet de tôles statoriques, ce paquet de tôles est transformé en un stator terminé par de opérations classiques qu'il n'est pas nécessaire de décrire en détail ici. On peut ainsi, par exemple, enfiler sur les tirants des rondelles épaisses d'extrémité, placer le paquet dans une presse, le presser et souder sous presse les tirants aux rondelles, les tirants étant ainsi précontraints.

On a représenté à la figure 4 plusieurs secteurs 2 empilés l'un au dessus de l'autre et décalés angulairement de 30° l'un par rapport à l'autre. On voit à la figure que la corne principale 10 de chacun des deux secteurs situés au premier plan recouvre la corne auxiliaire 15 de secteurs situés au second plan et décalés angulairement. La corne principale 10 des secteurs du second plan apparaît derrière la corne auxiliaire 15 des secteurs du premier plan.

Un cordon de soudure 27 est ménagé le long de certaines au moins des rangées parallèles 28 de cornes formées par les cornes principales 10 et les cornes auxiliaires 15 de secteurs superposés de façon à réunir lesdites cornes les unes aux autres, au niveau de leurs côtés superposables 18, 17 respectifs, et au tirant 26 correspondant.

Les tirants 26 sont disposés dans les trous 19,20 situés à l'extérieur de la zone utile magnétiquement du stator 25. Les tirants 26 permettent un verrouillage mécanique du paquet de tôles formé par les groupes de secteurs empilés les uns sur les autres et décalés angulairement, et un bon alignement des secteurs ainsi empilés. Les cordons de soudure 27 sont réalisés dans une région du stator extérieure à ladite zone utile magnétiquement, et dans laquelle la densité de flux magnétique est faible, de sorte que les pertes par courants de Foucault du fait du court-circuitage des tôles du stator par les cordons de soudure 27 sont faibles.

Dans la réalisation de la figure 5, les cornes principales 10a ne comportent pas d'ouverture 19, les cornes auxiliaires 15a ne comportent pas d'échancrure 20, et l'assemblage du paquet de tôles statoriques se fait sans l'utilisation de tirants. Le cordon de soudure 27 est ménagé comme représenté au niveau des côtés superposables respectifs 17 et 18 des cornes 10a et 15a.

On a schématisé aux figures 4 et 5 une enveloppe extérieure 30 à l'intérieur de laquelle est fixé axialement le stator 25.

La machine dynamo-électrique comportant un stator 25 tel que décrit ci-dessus est du type à circulation forcée de fluide de refroidissement entre le stator 25 et l'enveloppe 30. Elle est par exemple une machine du type ouvert à ventilation forcée par de l'air aspiré et refoulé dans l'atmosphère par une turbine (non représentée).

Comme représenté notamment aux figures 4 et 5, la hauteur en direction radiale des cornes principales 10, 23 des secteurs 2 est sensiblement égale à la hauteur radiale de l'espace 33 nécessaire, entre la surface périphérique extérieure 34 du stator 25 et la surface périphérique intérieure 35 du carter 30 de la machine, pour le passage d'un fluide de refroidissement dans le cas du stator 25, notamment de l'air de refroidissement dans le cas des machines du type ouvert.

Cependant, dans le mode de réalisation représenté notamment aux figures 19 et 20, la hauteur en direction radiale des cornes principales 10,23 des secteurs 2,22 et/ou celle des cornes auxiliaires peut être sensiblement inférieure à la hauteur radiale de l'espace 33 nécessaire, entre la surface périphérique extérieure 34 du stator et la surface périphérique intérieure 35 de l'enveloppe 30 pour le passage d'un fluide de refroidissement dudit stator 25.

A la figure 20, on a représenté en pointillé et légèrement décalé les deuxième 25b et troisième 25c secteurs ou groupes de secteurs suivant la direction axiale.

Dans ce mode de réalisation, l'espace 33 peut être défini par la hauteur de barreaux 33a s'étendant suivant la direction axiale et fixés sur le bord extérieur 5 des secteurs 2 de part et d'autre des cornes principales 10 et secondaires 15.

A cet effet, on peut prévoir, comme cela est représenté notamment à la figure 15, un renfoncement 33c ménagé sur le bord extérieur 5 du secteur de part et d'autre de la corne secondaire 15.

On a représenté schématiquement à la figure 6 une coupe partielle d'une machine dynamo-électrique 29 comportant un stator 25 logé à l'intérieur d'une enveloppe 30.

Le stator 25 est conforme au mode de réalisation représenté aux figures 1, 3 et 4. On a représenté successivement, en partant du haut de la figure, l'enveloppe 30, la partie supérieure des cornes principales 10, le tirant 26 qui repose dans les ouvertures respectives 19 et 20 des cornes principales 10 et auxiliaires 15 des différents secteurs 2.

On ne distingue donc pas les cornes principales 10 des cornes auxiliaires 15. Le plan de coupe passant à l'intérieur d'une encoche 7, la partie des secteurs comprise entre le fond 7a des encoches 7 et le bord périphérique intérieur 6 du stator n'est pas hachurée.

On a représenté à la figure 7 les bords contigus de deux secteurs 22 adjacents, ainsi que les cornes 23 respectives qui forment une corne composée 24. Les deux épaulements 43 constituent une assise perpendiculaire au bord radial commun, et dont on verra plus loin la fonction. Les parties restantes des bords extérieurs 40 constituent une échancrure de section en forme de V.

Dans la réalisation de la figure 8, les deux cornes 23, qui ne comportent pas d'épaulement, ménagent entre elles une échancrure de section en forme de V.

Dans la réalisation de la figure 9, on a représenté trois secteurs 22 situés dans un premier plan, l'un de ces secteurs étant disposé au centre de la figure. On a représenté également sur cette figure, en tirets, les traits apparents d'autres secteurs 22 disposés dans un second plan et décalés angulairement par rapport aux secteurs du premier plan. On a donc représenté en tirets le contour cylindrique 34 des secteurs du second plan apparaissant derrière les cornes 23 des secteurs du premier plan. On a également représenté, en trait plein, les cornes des secteurs du second plan qui apparaissent à l'extérieur du contour circulaire 34 des secteurs 22 du premier plan.

Au centre des deux cornes composées 24 situées au milieu et dans la partie droite de la figure, on a représenté un tirant soudé par un cordon de soudure 27 respectivement à la corne 23 de deux secteurs 22 adjacents.

On a également représenté l'enveloppe extérieure cylindrique 30 dont le bord périphérique cylindrique intérieur 35 passe à proximité des extrémités extérieures des cornes 23.

Dans ce mode de réalisation, l'enveloppe 30 est formée à partir de plusieurs portions 30a, de viroles cylindriques que l'on assemble deux à deux par soudure le long de leurs bords respectifs dirigées selon l'axe du stator.

Suivant le diamètre de l'enveloppe, on peut ainsi réaliser cette dernière à partir de deux, trois ou plus de portions de viroles, le nombre de portions restant petit pour éviter la multiplication des soudures (égal à ou sous-multiple de 360°/A).

On voit, dans la partie gauche de la figure 9, un cordon de soudure 36 reliant les bords adjacents de deux portions de viroles contigus 30a. Un profilé plat 37 est disposé sur les deux épaulements 43 des secteurs 22 avant l'exécution du cordon de soudure 36, de sorte que le profilé 37 se trouve réuni par le cordon de soudure 36 aux bords respectifs des portions 30a. Dans l'exemple représenté, le profilé 37 a une largeur en direction tangentielle occupant toute la place disponible entre les deux épaulements 43, et ne peut donc pas être soudé facilement aux cornes 23. Il est tout à fait possible de prévoir les formes respectives du profilé 37 et des parties supérieures des cornes 23 de façon qu'il soit possible de souder le profilé 37 aux cornes 23 avant de souder les portions 30a de viroles au profilé 37 et aux portions 30a de viroles. L'enveloppe 30 se trouve ainsi solidement solidarisée avec le stator 25.

Le plan de coupe de la figure 10 est conçu de façon à faire apparaître sur cette figure les cornes 23 qui supportent le tirant 26 au dessus de la surface périphérique 34 du paquet de tôles.

Dans la réalisation représentée à la figure 11, le secteur 22 comporte, en plus des cornes 23 décrites ci-dessus, une corne auxiliaire 45 adaptée à être découpée dans l'espace 16 compris à la figure 2 entre le bord extérieur 5 du secteur représenté dans la partie inférieure de la figure et le bord intérieur 6 du secteur adjacent. On notera que la corne auxiliaire 45 est centrée sur l'axe de symétrie du secteur 22, dans la mesure où elle correspond, après un décalage angulaire de l'ange A/2, à la corne composée 24 constituée par deux cornes 23 adjacentes et centrée sur le bord radial commun des deux secteurs correspondants. Le bord extérieur sensiblement tangentiel 46 de la corne auxiliaire 45 comporte une échancrure circulaire 47 adaptée à servir d'assise au tirant 26.

Le mode de réalisation représenté à la figure 12 est très voisin de celui représenté à la figure 9. On a simplement reporté à la figure 12 les contours des cornes auxiliaires 45. On voit ainsi, au centre de la figure, la corne auxiliaire 45 du secteur 22 située en premier plan au centre de ladite figure. On voit également, dans la partie gauche de la figure 12, le contour, en pointillés, et l'échancrure 47, en trait plein, de la corne auxiliaire 45 d'un secteur situé dans un second plan et décalé par rapport aux secteurs précédents.

On a représenté à la figure 13, de façon schématique, une partie de la surface supérieure d'un stator 25 selon le mode de réalisation des figures 9 ou 12, dans le cas où les rangées 28 de cornes 23 sont inclinées par rapport à l'axe du stator 25, et forment une spirale qui apparaît en vue de dessus sous la forme d'une droite inclinée par rapport à l'axe du stator. On a représenté la périphérie du stator 25 à un des endroits où est inséré un élément longitudinal ou profilé 37 entre les rangées 48 constituées par les bords tangentiels respectifs 41 des cornes 23 correspondantes. Ces rangées 48 ont une forme en spirale qui apparaît, en vue de dessus, sous la forme d'une ligne droite inclinée par rapport à la direction D de l'axe du stator.

Dans la réalisation de la figure 14, la partie du stator représentée à la figure 13 a été recouverte par les parties jointives respectives de deux portions 30a de viroles reliés l'un à l'autre par un cordon de soudure 49 parallèle à la direction D de l'axe du stator. On voit que le cordon de soudure 49 recouvre successivement la rangée 48 de gauche dans la partie supérieure de la figure, le profilé 37 sur la partie centrale de la figure, et la rangée 48 de droite à la partie inférieure de la figure. Les deux portions 30a de viroles sont ainsi solidement reliés l'un à l'autre au profilé 37 et aux rangées 48 des bords supérieurs 41 des cornes 43.

Bien entendu, la présente invention n'est pas limitée aux modes de réalisation que l'on vient de décrire et qui sont représentés aux figures, et on peut apporter à ces modes de réalisation de nombreux changements et modifications sans sortir du domaine de l'invention.

On peut ainsi, à titre d'exemple, modifier les formes respectives des cornes principales et auxiliaires, des tirants et profilés, envisager d'autres endroits de réalisation des cordons de soudure, prévoir un décalage angulaire entre secteurs empilés adjacents différents de A/2, égal par exemple à A/3, et prévoir sur chaque secteur un nombre de cornes principales et/ou auxiliaires différent de celui décrit.

## Revendications

1. Secteur (2,22) sensiblement circulaire pour tôle statorique, adapté à être découpé sensiblement transversalement dans une bande (1) de tôle ayant des propriétés magnétiques, et à être assemblé avec d'autres secteurs (2,22) sensiblement identiques pour former une tôle de stator de machine dynamo-électrique, ce secteur (2,22) comportant un bord périphérique extérieur (5) et un bord périphérique intérieur circulaire (6) reliés l'un à l'autre par deux bords latéraux (8,9) dirigés sensiblement radialement, le secteur comportant en outre, sur son bord extérieur (5) au moins une corne principale (10,10a,23) en saillie radialement vers l'extérieur et conformée de façon à être découpée au voisinage de l'un des bords latéraux (8,9) dudit secteur (2,22) dans la zone (11) inutilisée de la bande (1) de tôle située entre le bord longitudinal (3,4) correspondant de ladite bande (1), le bord extérieur (5) dudit secteur (2,22) et le bord latéral (8,9) correspondant d'un second secteur (2,22) adapté à être découpé dans la partie de bande (1) adjacente au bord extérieur (5) dudit secteur (2,22), caractérisé en ce que le secteur présente sur son bord extérieur (5) au moins une corne auxiliaire (15,45), généralement tronquée, décalée angulairement de la corne principale (10,23) d'un angle égal à une fraction, par exemple à la moitié (A/2), de l'angle au centre (A) correspondant audit secteur (2,22), et adaptée à être découpée dans la zone inutilisée (16) de la bande de tôle située entre le bord extérieur (5) dudit secteur (2,22) et le bord intérieur (6) d'un autre secteur (2,22) adjacent.

2. Secteur (2,22) selon la revendication 1, caractérisé en ce que la corne principale (23) a une forme sensiblement trapézoïdale et a en direction radiale une hauteur prédéterminée.

3. Secteur (22) selon la revendication 1 ou 2, caractérisé en ce qu'il comporte une corne principale (23) à chaque coin de son bord extérieur (5), les deux cornes principales (23) adjacentes de deux secteurs (22) contigus assemblés dans un même plan le long d'un bord latéral (8,9) commun étant adaptées à former une corne composée (24).

4. Secteur (2,22) selon l'une quelconque des revendications 1 à 3, caractérisé en ce que la corne auxiliaire (15,45) présente au moins un côté (17,46) adapté à se superposer sensiblement à un côté correspondant (18,43) de la corne principale (10,23) dudit secteur (2,22) par un décalage angulaire d'un angle (A/2) égal à ladite fraction de l'angle au centre (A) correspondant audit secteur (2,22).

5. Secteur (2) selon l'une des revendications 1 à 4, caractérisé en ce que la corne principale (10) présente une ouverture (19), et le cas échéant la corne auxiliaire (15) présente une échancrure concave (20) adaptée à se superposer au moins partiellement à l'ouverture (19) par ledit décalage angulaire.

6. Secteur (2) selon l'une des revendications 1 à 4, caractérisé en ce que la corne principale (10) et la corne auxiliaire (15) présentent respectivement une échancrure principale concave (19a) et au moins une échancrure auxiliaire concave (20a,20b), l'échancrure auxiliaire concave (20a,20b) étant adaptée à se superposer au moins partiellement à l'échancrure principale concave (19a) de la corne principale, par ledit décalage angulaire.

7. Secteur (2) selon la revendication 6, caractérisé en ce que la corne auxiliaire comporte deux échancrures auxiliaires concaves (20a,20b) ménagées respectivement au coin des bords extérieurs (15a,15b) de la corne auxiliaire.

8. Secteur (2) selon la revendication 7, caractérisé en ce que les échancrures auxiliaires et les échancrures principales sont de forme sensiblement identique, les échancrures auxiliaires de la corne auxiliaire d'un secteur étant adaptées à se superposer sensiblement aux échancrures principales d'une corne composée (24), par ledit décalage angulaire.

9. Stator (25) de machine dynamo-électrique, ce stator (25) étant constitué à partir de secteurs circulaires (2,22) assemblés et fixés de façon à former un paquet de tôles statoriques ; deux secteurs, ou groupes de secteurs (2,22) adjacents, empilés l'un sur l'autre dans la direction axiale du stator, étant décalés angulairement l'un de l'autre d'un angle égal à une fraction, par exemple à la moitié (A/2) de l'angle au centre (A) correspondant audit secteur (2,22), caractérisé en ce qu'il est constitué à partir de secteurs (2,22) selon l'une des revendications 1 à 8.

10. Stator selon la revendication 9, constitué de secteurs (2) selon l'une des revendications 1 à 8, caractérisé en ce qu'une tige (26) est engagé dans les ouvertures (19) ou échancrures principales (19a) superposées axialement de la corne principale (10) des secteurs ou groupes de secteurs (2) superposés axialement correspondants, et est reçue dans les échancrures auxiliaires (20, 20a, 20b) de la corne auxiliaire (15) d'autres secteurs ou groupes de secteurs (2) interposés axialement entre deux secteurs ou groupes de secteurs (2) correspondants et décalés angulairement dudit angle par rapport à ces derniers.

11. Stator selon la revendication 9 ou 10, constitué de secteurs selon la revendication 4, caractérisé en ce qu'un cordon de soudure (27) est ménagé le long de certaines au moins des rangées (28) parallèles de cornes formées par les cornes principales (10,23) et auxiliaires (15,45) de façon à réunir lesdites cornes les unes aux autres au niveau de leurs côtés superposables (18,43 ; 17,46) respectifs, et le cas échéant à la tige (26) correspondante.

12. Stator selon la revendication 9, constitué de secteurs ou groupes de secteurs selon la revendication 7 ou 8, empilés suivant la direction axiale, caractérisé en ce que chaque secteur ou groupe de secteurs comporte deux types de tiges (26a, 26b), à savoir :
- une tige principale (26a) destinée à être engagée principalement dans une échancrure ou groupe d'échancrures principale(s) d'un secteur ou groupe de secteurs ;
- une tige auxiliaire (26b) destinée à être engagée principalement dans une échancrure ou groupe d'échancrures auxiliaire(s) d'un secteur ou groupe de secteurs ;
la tige principale d'un secteur étant engagée en outre dans au moins une échancrure auxiliaire coïncidente des secteurs ou groupe de secteurs adjacents ;
la tige auxiliaire dudit secteur étant engagée en outre dans au moins une échancrure principale coïncidente desdits secteurs ou groupe de secteurs adjacents.

13. Stator selon la revendication 12, caractérisé en ce que suivant la direction axiale, les tiges principale et auxiliaire sont alternées d'un secteur ou groupe de secteurs aux secteurs ou groupes de secteurs adjacents.

14. Machine dynamo-électrique, comportant un stator (25) fixé à l'intérieur d'une enveloppe (30) de la machine (29), caractérisée en ce qu'elle comporte un stator (25) selon l'une des revendications 9 à 13.

15. Machine selon la revendication 14, caractérisée en ce que la hauteur en direction radiale des cornes principales (10,23) des secteurs (2,22) est égale à la hauteur radiale de l'espace (33) nécessaire, entre la surface périphérique extérieure (34) du stator et la surface périphérique intérieure (35) de l'enveloppe (30), pour le passage d'un fluide de refroidissement dudit stator (25).

16. Machine selon la revendication 14 ou 15, caractérisée en ce que l'enveloppe (30) est constituée par un nombre prédéterminé de portions (30a) de viroles cylindriques assemblées deux à deux, et en ce que deux portions (30a) de viroles adjacents sont assemblés par un cordon de soudure (36) reliant les bords respectifs des deux portions (30a) de viroles l'un à l'autre et à un élément longitudinal (37) placé sous ces bords dans l'ouverture des cornes principales (23), et le cas échéant dans l'échancrure (47) des cornes auxiliaires (45), d'une rangée de cornes située sous lesdits bords.

17. Machine selon la revendication 16, le stator (25) comportant des rangées (48) de cornes inclinées par rapport à la direction (D) de l'axe dudit stator, caractérisée en ce que la largeur des cornes de part et d'autre dudit élément longitudinal (37) est déterminée de façon telle que le cordon de soudure (36) est ménagé parallèlement à la direction (D) de l'axe du stator (25) et relie les bords des deux portions (30a) de viroles l'un à l'autre et soit à l'élément longitudinal (37), soit une partie (41) des cornes (23) située d'un côté ou de l'autre dudit élément longitudinal (37).

18. Machine selon la revendication 14, caractérisée en ce que la hauteur en direction radiale des cornes principales (10) des secteurs (2) et/ou celle des cornes auxiliaires (15) est sensiblement inférieure à la hauteur radiale de l'espace (33) nécessaire, entre la surface périphérique extérieure (34) du stator et la surface périphérique intérieure (35) de l'enveloppe (30) pour le passage d'un fluide de refroidissement dudit stator (25).
